# EUROPEAN PATENT APPLICATION

(11) **EP 2 801 938 A1**
(43) Date of publication of application: **12.11.2014**
(21) Application number: 14167706.2
(22) Date of filing: 09.05.2014
(51) Int. Cl.: G06Q 10/06

(54) **Predictive maintenance for industrial products using big data**

(30) Priority: 09.05.2013 US 201361821639 P; 22.11.2013 US 201314087730
(71) Applicant: Rockwell Automation Technologies, Inc., Mayfield Heights, OH 44124 (US)
(72) Inventor: Asenjo, Juan L., Timberlake, OH 44095 (US); Strohmenger, John, Strongsville, OH 44136 (US); Nawalaniec, Stephen Thomas, Southlake, TX 76092 (US); Hegrat, Bradford Henry, Montville, OH 44064 (US); Harkulich, Joseph A., Willoughby, OH 44094 (US); Korpela, Jessica Lin, Milwaukee, WI 53207 (US); Wricht, Jenifer Rydberg, Renton, WA 98058 (US); Hessmer, Rainer, Rancho Santa Margarita, CA 92688 (US); Dyck, John, Chardon, OH 44024 (US); Hill, Edward Alan, Chagrin Falls, OH 44022 (US); Conti, Salvatore T., Olmsted Township, OH 44138 (US)
(74) Representative: Grünecker, Kinkeldey, Stockmair & Schwanhäusser

(57) **Abstract**

A cloud-based predictive maintenance service collects industrial data from multiple industrial customers for storage and analysis on a cloud platform. The service analyzes data gathered from multiple customers across different industries to identify operational trends as a function of industry type, application type, equipment in use, device configurations, and other such variables. Based on results of the analysis, the predictive maintenance service predicts anticipated device failures or system inefficiencies for individual customers. Notification services alert the customers of impending failures or inefficiencies before the issues become critical. The cloud-based notification services also notify appropriate technical support entities to facilitate proactive maintenance and device management.

## Description

### RELATED APPLICATIONS

This application claims the benefit of U.S. Provisional Patent Application Serial No. 61/821,639, filed on May 9, 2013, and entitled "REMOTE SERVICES AND ASSET MANAGEMENT SYSTEMS AND METHODS," the entirety of which is incorporated herein by reference.

### TECHNICAL FIELD

The subject application relates generally to industrial automation, and, more particularly, to predictive maintenance of industrial systems using big data analysis in a cloud platform.

### BACKGROUND

Industrial controllers and their associated I/O devices are central to the operation of modern automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such programming structures. In general, industrial controllers read input data from sensors and metering devices that provide discreet and telemetric data regarding one or more states of the controlled system, and generate control outputs based on these inputs in accordance with the user-defined program.

In addition to industrial controllers and their associated I/O devices, some industrial automation systems may also include low-level control systems, such as vision systems, barcode marking systems, variable frequency drives, industrial robots, and the like which perform local control of portions of the industrial process, or which have their own localized control systems.

The collection of industrial devices that makeup a given industrial automation system is constantly in flux, As a result of system expansions, maintenance concerns, and device upgrades, industrial devices are continually being added, removed, switched, and replaced. Consequently, maintaining accurate documentation of an enterprise's industrial assets, as well as the configurations of respective industrial devices comprising those assets, can be a laborious undertaking that nevertheless yields imprecise or incomplete system documentation. Because of the difficulty in maintaining accurate system documentation, asset owners may continue to use devices well past their obsolescence, unaware that hardware or software upgrades for those devices have become available, or that alternating device configurations may improve performance of their industrial processes.

Moreover, since industrial systems often evolve over long periods of time, with newer assets being integrated to operate in conjunction with older pre-existing devices, system integrators may be unaware that the particular combination of devices and assets comprising their larger industrial system could be reconfigured for more optimal operation.

The above-described deficiencies of today's industrial control and business systems are merely intended to provide an overview of some of the problems of conventional systems, and are not intended to be exhaustive. Other problems with conventional systems and corresponding benefits of the various non-limiting embodiments described herein may become further apparent upon review of the following description.

### SUMMARY

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

One or more embodiments of the present disclosure relate to the use of big data analysis in a cloud platform to facilitate predictive maintenance of industrial automation systems. In one or more embodiments, a cloud-based predictive maintenance system running as a service on a cloud platform can collect and monitor device, asset, and system data from participating industrial facilities. At the device level, the collected data can include device configuration information (e.g., device identifier, firmware version, configurations settings, *etc.*) as well as real-time status information for the devices (health and diagnostics, faults, alarms, *etc.*). At the asset and system levels, the collected data can include such information as asset key performance indicators (KPIs), process variables, and characterizations of larger system behavior over time.

The predictive maintenance system can then perform big data analysis on the data in the cloud platform to provide a number of remote predictive maintenance services. These services can include providing notifications when a newer firmware version is available for a given device, detection and notification of system trends indicative of an impending device or system failure, detection and notification of device or system performance degradation, recommending device upgrades or system reconfigurations that will improve system performance or device interaction, or other such services.

Some embodiments of the cloud-based predictive maintenance system can also facilitate proactive involvement of technical support personnel when certain types of maintenance issues are detected. For example, in response to detection of an impending device or asset failure, the cloud-based predictive maintenance system can alert specified technical support personnel. Since the predictive maintenance system maintains detailed documentation on each customer's devices, configurations, and systems of industrial assets, the support personnel can access this documentation remotely and gather information necessary to identify the maintenance issue and provide personalized assistance. This system provides a framework by which the support personnel can preemptively contact the asset owner with a solution before the maintenance issue becomes critical.

To facilitate one or more aspects described above, the cloud-based system can maintain a customer model that determines how the system will carry out certain predictive maintenance operations. The customer model can include, for example, a client identifier and contact information, notification preferences, preferred technical support personnel, existing service contracts between the asset owner and one or more device vendors, and other such information. The predictive maintenance system can leverage this information to determine who should be notified in the event of a detected maintenance concern, a level of support that should be provided, which technical support person should be notified in response to a detected maintenance issue, *etc.*

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a high-level overview of an industrial enterprise that leverages cloud-based services.
FIG. 2 is a block diagram of an exemplary cloud-based predictive maintenance system.
FIG. 3 illustrates collection of customer-specific industrial data by a cloud-based predictive maintenance system.
FIG. 4 illustrates a hierarchical relationship between example data classes.
FIG. 5 illustrates a configuration in which an industrial device acts as a cloud proxy for other industrial devices comprising an industrial system.
FIG. 6 illustrates a configuration in which a firewall box serves as a cloud proxy for a set of industrial devices.
FIG. 7 illustrates delivery of a device model to a cloud-based predictive maintenance system.
FIG. 8 illustrates collection of data from devices and assets comprising respective different industrial systems for storage in cloud-based data storage.
FIG. 9 illustrates a cloud-based system for providing predictive maintenance services.
FIG. 10 depicts an example scenario in which a cloud-based predictive maintenance system is used to track and manage industrial device firmware upgrades.
FIG. 11 illustrates generation of proactive notifications by the cloud-based predictive maintenance system.
FIG. 12 illustrates an example architecture in which a predictive maintenance system facilitates involvement of a technical support entity to proactively mitigate impending system failures.
FIG. 13 illustrates an exemplary cloud-based architecture for tracking product data through an industrial supply chain and predicting quality concerns at the supply-chain level.
FIG. 14 is a flowchart of an example methodology for delivering predictive maintenance notifications based on cloud-based monitoring of industrial systems.
FIG. 15 is a flowchart of an example methodology for determining a recommended device or system recommendation based on big data analysis performed in a cloud platform.
FIG. 16 is an example computing environment.
FIG. 17 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system,"' "platform." "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (*e.g. ,* screwed or bolted) or removably affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (*e.g.,* data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; *e.g.,* the set with no elements therein. Thus, a "set" in the subject disclosure includes one or more elements or entities. As an illustration, a set of controllers includes one or more controllers; a set of data resources includes one or more data resources; *etc.* Likewise, the term "group" as utilized herein refers to a collection of one or more entities; *e.g*., a group of nodes refers to one or more nodes.

Various aspects or features will be presented in terms of systems that may include a number of devices, components, modules, and the like. It is to be understood and appreciated that the various systems may include additional devices, components, modules, *etc.* and/or may not include all of the devices, components, modules *etc.* discussed in connection with the figures. A combination of these approaches also can be used.

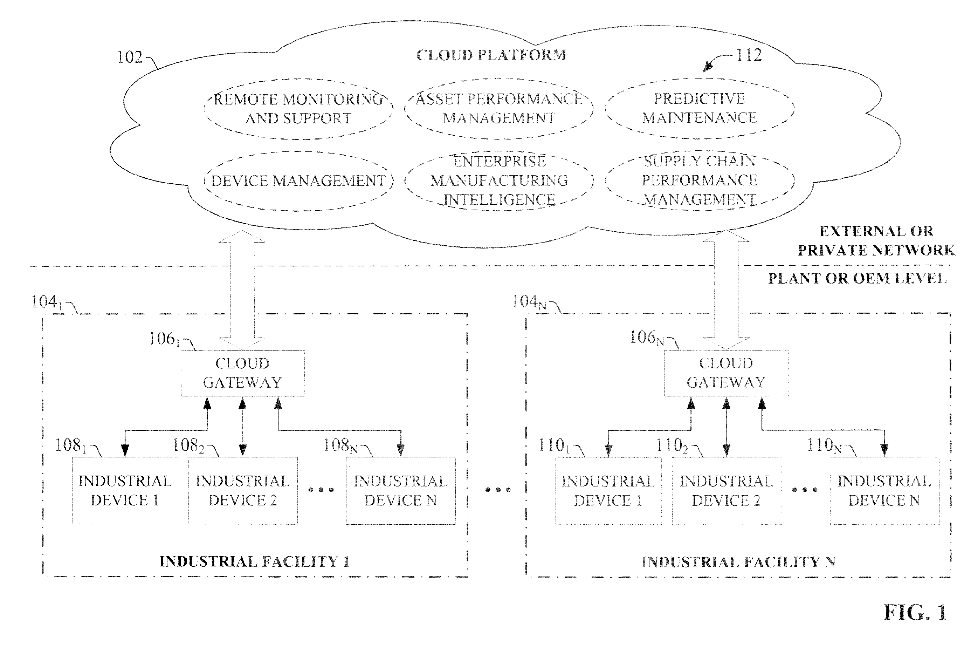

To provide a general context for the cloud-based predictive maintenance system and services described herein, FIG. 1 illustrates a high-level overview of an industrial enterprise that leverages cloud-based services. The enterprise comprises one or more industrial facilities 104, each having a number of industrial devices 108 and 110 in use. The industrial devices 108 and 110 can make up one or more automation systems operating within the respective facilities 104. Exemplary automation systems can include, but are not limited to, batch control systems (*e.g.,* mixing systems), continuous control systems (*e*.*g*., PID control systems), or discrete control systems Industrial devices 108 and 110 can include such devices as industrial controllers (*e*.*g*., programmable logic controllers or other types of programmable automation controllers); field devices such as sensors and meters; motor drives; human-machine interfaces (HMIs): industrial robots, barcode markers and readers; vision system devices *(e.g.,* vision cameras); smart welders; or other such industrial devices.

Exemplary automation systems can include one or more industrial controllers that facilitate monitoring and control of their respective processes. The controllers exchange data with the field devices using native hardwired I/O or via a plant network such as Ethernet/IP, Data Highway Plus, ControlNet, Devicenet, or the like. A given controller typically receives any combination of digital or analog signals from the field devices indicating a current state of the devices and their associated processes (*e.g*., temperature, position, part presence or absence, fluid level, *etc.*), and executes a user-defined control program that performs automated decision-making for the controlled processes based on the received signals. The controller then outputs appropriate digital and/or analog control signaling to the field devices in accordance with the decisions made by the control program. These outputs can include device actuation signals, temperature or position control signals, operational commands to a machining or material handling robot, mixer control signals, motion control signals, and the like. The control program can comprise any suitable type of code used to process input signals read into the controller and to control output signals generated by the controller, including but not limited to ladder logic, sequential function charts, function block diagrams, structured text, or other such platforms.

Although the exemplary overview illustrated in FIG. 1 depicts the industrial devices 108 and 110 as residing in fixed-location industrial facilities 104, the industrial devices may also be part of a mobile control and/or monitoring application, such as a system contained in a truck or other service vehicle.

According to one or more embodiments of this disclosure, industrial devices 108 and 110 can be coupled to a cloud platform 102 to leverage cloud-based applications and services. That is, the industrial devices 108 and 110 can be configured to discover and interact with cloud-based computing services 112 hosted by cloud platform 102. Cloud platform 102 can be any infrastructure that allows shared computing services 112 to be accessed and utilized by cloud-capable devices. Cloud platform 102 can be a public cloud accessible via the Internet by devices having Internet connectivity and appropriate authorizations to utilize the services 112. In some scenarios, cloud platform 102 can be provided by a cloud provider as a platform-as-a-service (PaaS), and the services 112 can reside and execute on the cloud platform 102 as a cloud-based service. In some such configurations, access to the cloud platform 102 and associated services 112 can be provided to customers as a subscription service by an owner of the services 112. Alternatively, cloud platform 102 can be a private cloud operated internally by the enterprise. An exemplary private cloud platform can comprise a set of servers hosting the cloud services 112 and residing on a corporate network protected by a firewall.

Cloud services 112 can include, but are not limited to, data storage, data analysis, control applications (*e.g*., applications that can generate and deliver control instructions to industrial devices 108 and 110 based on analysis of near real-time system data or other factors), remote monitoring and support, device management, asset performance management, predictive maintenance services, enterprise manufacturing intelligence services, supply chain performance management, notification services, or other such applications. If cloud platform 102 is a web-based cloud, industrial devices 108 and 110 at the respective industrial facilities 104 may interact with cloud services 112 via the Internet. In an Exemplary configuration, industrial devices 108 and 110 may access the cloud services 112 through separate cloud gateways 106 at the respective industrial facilities 104, where the industrial devices 108 and 110 connect to the cloud gateways 106 through a physical or wireless local area network or radio link. In another exemplary configuration, the industrial devices 108 and 110 may access the cloud platform directly using an integrated cloud gateway service. Cloud gateways 106 may also comprise an integrated component of a network infrastructure device, such as a firewall box, router, or switch.

Providing industrial devices with cloud capability via cloud gateways 106 can offer a number of advantages particular to industrial automation. For one, cloud-based storage offered by the cloud platform 102 can be easily scaled to accommodate the large quantities of data generated daily by an industrial enterprise. Moreover, multiple industrial facilities at different geographical locations can migrate their respective automation data to the cloud platform 102 for aggregation, collation, collective big data analysis, and enterprise-level reporting without the need to establish a private network between the facilities. Industrial devices 108 and 110 and/or cloud gateways 106 having smart configuration capability can be configured to automatically detect and communicate with the cloud platform 102 upon installation at any facility, simplifying integration with existing cloud-based data storage, analysis, or reporting applications used by the enterprise. In another exemplary application, cloud-based diagnostic applications can access the industrial devices 108 and 110 via cloud gateways 106 to monitor the health of respective automation systems or their associated industrial devices across an entire plant, or across multiple industrial facilities that make up an enterprise. In another example, cloud-based lot control applications can be used to track a unit of product through its stages of production and collect production data for each unit as it passes through each stage (*e.g.*, barcode identifier, production statistics for each stage of production, quality test data, abnormal flags, *etc.).* These industrial cloud-computing applications are only intended to be exemplary, and the systems and methods described herein are not limited to these particular applications. As these examples demonstrate, the cloud platform 102, working with cloud gateways 106, can allow builders of industrial applications to provide scalable solutions as a service, removing the burden of maintenance, upgrading, and backup of the underlying infrastructure and framework.

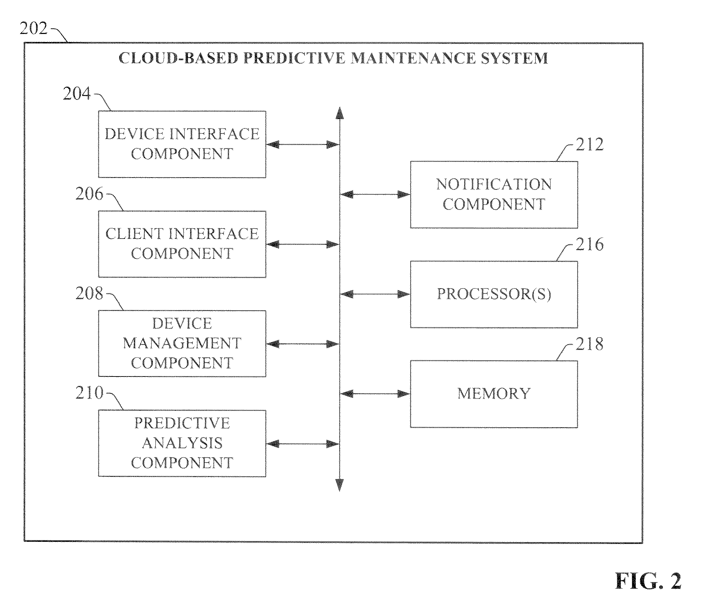

FIG. 2 is a block diagram of an exemplary cloud-based predictive maintenance system according to one or more embodiments of this disclosure. Aspects of the systems, apparatuses, or processes explained in this disclosure can constitute machine-executable components embodied within machine(s), *e.g.*, embodied in one or more computer-readable mediums (or media) associated with one or more machines. Such components, when executed by one or more machines, *e.g.*, computer(s), computing device(s), automation device(s), virtual machine(s), *etc.,* can cause the machine(s) to perform the operations described.

Predictive maintenance system 202 can include a device interface component 204, client interface component 206, a device management component 208, a predictive analysis component 210, a notification component 212, one or more processors 216, and memory 218. In various embodiments, one or more of the device interface component 204, client interface component 206, device management component 208, predictive analysis component 210, notification component 212, the one or more processors 216, and memory 218 can be electrically and/or communicatively coupled to one another to perform one or more of the functions of the predictive maintenance system 202. In some embodiments, components 204, 206, 208, 210, and 212 can comprise software instructions stored on memory 218 and executed by processor(s) 216. Predictive maintenance system 202 may also interact with other hardware and/or software components not depicted in FIG. 2. For example, processor(s) 216 may interact with one or more external user interface devices, such as a keyboard, a mouse, a display monitor, a touchscreen, or other such interface devices.

Device interface component 204 can be configured to receive industrial data (*e.g*., configuration data, status data, process variable data, *etc*.) sent by one or more cloud-capable industrial devices, cloud gateways, or other sources of industrial data. Client interface component 206 can be configured to exchange data with one or more client devices via an Internet connection. For example, client interface component 206 can receive customer profile data, requests for firmware upgrades, customer service selections, or other such information from a client device. Client interface component 206 can also deliver upgrade notifications, firmware upgrades, notifications of impending device failures, identification of asset or system inefficiencies, configuration recommendations, or other such data to the client device.

Device management component 208 can be configured to maintain and manage current information on devices comprising one or more industrial assets in use at an industrial facility. This information can include device identifiers, current firmware versions, current device configuration settings, information on neighboring devices that interact with the device, a role of the device within a larger system context, or other such information.

Predictive analysis component 210 can be configured to perform big data analysis on data gathered and stored by the cloud-based predictive maintenance system. For example, analysis can be performed on large sets of device, asset, process, and system data collected from multiple industrial enterprises to identify operational patterns, optimal hardware and software configurations for particular industrial applications, device lifecycle trends that can be used to predict future device or system failures, or other analysis goals. As another example, predictive analysis component 210 can compare a system configuration for a given industrial facility with the large set of data collected for similar industrial applications in use at other industrial facilities. Based on the comparison and analysis, predictive analysis component 210 can identify alternate device or software configurations that may improve system performance at the industrial facility.

Notification component 212 can be configured to generate remote notifications to one or more client devices associated with plant personnel or technical support personnel in response to critical events detected by device management component 208 or predictive analysis component 210. These can include notifications of an impending device or asset failure, notifications that certain measured system variables indicate possible performance degradation, alerts that new firmware revisions are available for a given device, or other such notifications.

The one or more processors 216 can perform one or more of the functions described herein with reference to the systems and/or methods disclosed. Memory 218 can be a computer-readable storage medium storing computer-executable instructions and/or information for performing the functions described herein with reference to the systems and/or methods disclosed.

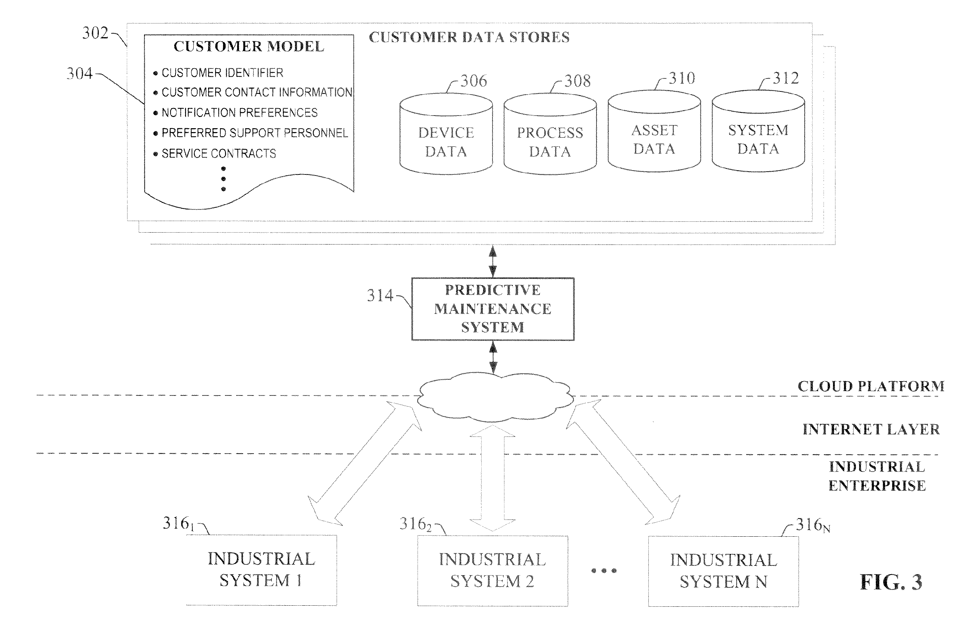

FIG. 3 illustrates collection of customer-specific industrial data by a cloud-based predictive maintenance system according to one or more embodiments. Predictive maintenance system 314 can execute as a cloud-based service on a cloud platform (*e.g*., cloud platform 102 of FIG. 1), and collect data from multiple industrial systems 316. Industrial systems 316 can comprise different industrial automation systems within a given facility and/or different industrial facilities at diverse geographical locations. Industrial systems 316 can also correspond to different business entities (*e.g.,* different industrial enterprises or customers), such that predictive maintenance system 314 collects and maintains a distinct customer data store 302 for each customer or business entity.

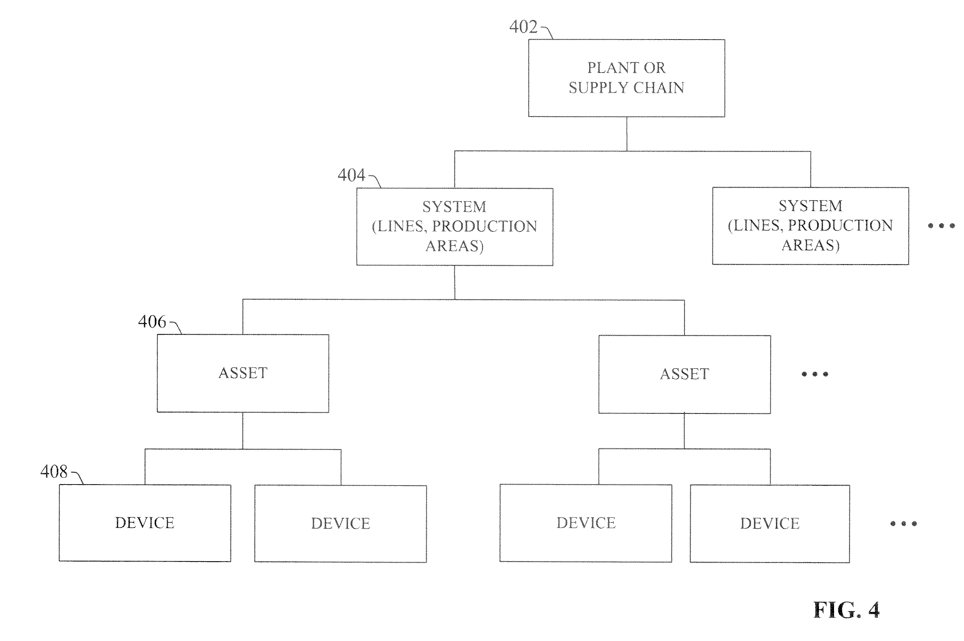

Predictive maintenance system 314 can organize manufacturing data collected from industrial systems 316 according to various classes. In the illustrated example, manufacturing data is classified according to device data 306, process data 308, asset data 310, and system data 312. FIG. 4 illustrates a hierarchical relationship between these example data classes. A given plant or supply chain 402 can comprise one or more industrial systems 404. Systems 404 represent the production lines or productions areas within a given plant facility or across multiple facilities of a supply chain. Each system 404 is made up of a number of assets 406 representing the machines and equipment that make up the system (*e*.*g*., the various stages of a production line). In general, each asset 406 is made up of multiple devices 408, which can include, for example, the programmable controllers, motor drives, human-machine interfaces (HMIs), sensors, meters, *etc.* comprising the asset 406. The various data classes depicted in FIGs. 3 and 4 are only intended to be exemplary, and it is to be appreciated that any organization of industrial data classes maintained by predictive maintenance system 314 is within the scope of one or more embodiments of this disclosure.

Returning now to FIG. 3, predictive maintenance system 314 collects and maintains data from the various devices and assets that make up industrial systems 316 and classifies the data according to the aforementioned classes for the purposes of near real-time monitoring and predictive analysis. Device data 306 can comprise device-level information relating to the identity, configuration, and status of the respective devices comprising industrial systems 316, including but not limited to device identifiers, device statuses, current firmware versions, health and diagnostic data, device documentation, identification and relationship of neighboring devices that interact with the device, *etc.*

Process data 308 can comprise information relating to one or more processes or other automation operations carried out by the devices; *e.g.*, device-level and process-level faults and alarms, process variable values (speeds, temperatures, pressures, *etc.*), and the like.

Asset data 310 can comprise information generated collected or inferred based on data aggregated from multiple industrial devices over time, which can yield a higher asset-level views of industrial systems 316. Example asset data 310 can include performance indicators (KPIs) for the respective assets, asset-level process variables, faults, alarms, *etc.* Since asset data 310 yields a longer term view of asset characteristics relative to the device and process data, predictive maintenance system 314 can leverage asset data 310 to identify operational patterns and correlations unique to each asset, among other types of analysis.

System data 312 can comprise collected or inferred information generated based on data aggregated from multiple assets over time. System data 312 can characterize system behavior within a large system of assets, yielding a system-level view of each industrial system 316. System data 312 can also document the particular system configurations in use and industrial operations performed at each industrial system 316. For example, system data 312 can document the arrangement of assets, interconnections between devices, the product being manufactured at a given facility, an industrial process performed by the assets, a category of industry of each industrial system (*e.g*., automotive, oil and gas, food and drug, marine, textiles, *etc.*), or other relevant information. Among other functions, this data can be accessed by technical support personnel during a support session so that particulars of the customer's unique system and device configurations can be obtained without reliance on the customer to possess complete knowledge of their assets.

As an example, a given industrial facility can include packaging line (the system), which in turn can comprise a number of individual assets (a filler, a labeler, a capper, a palletizer, *etc.*). Each asset comprises a number of devices (controllers, variable frequency drives, HMIs, *etc.*). Using an architecture similar to that depicted in FIG. 1, predictive maintenance system 314 can collect industrial data from the individual devices during operation and classify the data in a customer data store 302 according to the aforementioned classifications. Note that some data may be duplicated across more than one class. For example, a process variable classified under process data 308 may also be relevant to the asset-level view of the system represented by asset data 310. Accordingly, such process variables may be classified under both classes. Moreover, subsets of data in one classification may be derived or inferred based on data under another classification. Subsets of system data 312 that characterize certain system behaviors, for example, may be inferred based on a long-term analysis of data in the lower-level classifications.

In addition to maintaining data classes 306-312, each customer data store can also maintain a customer model 304 containing data specific to a given industrial entity or customer. Customer model 304 contains customer-specific information and preferences, which can be leveraged by predictive maintenance system 314 to determine how detected maintenance issues should be handled. Example information maintained in customer model 304 can include a client identifier, client contact information specifying which plant personnel should be notified in response to detection of certain maintenance concerns, notification preferences specifying how plant personnel should be notified (*e.g.,* email, mobile phone, text message, *etc*.), preferred technical support personnel to be contacted in the event of a detected maintenance concern, service contracts that are active between the customer and the technical support entity, and other such information. Predictive maintenance system 314 can marry data collected for each customer with the customer model for identification and event handling purposes.

As noted above, industrial data can be migrated from industrial devices to the cloud platform using cloud gateways. To this end, some devices may include integrated cloud gateways that directly interface each device to the cloud platform. Alternatively, some configurations may utilize a cloud proxy device that collects industrial data from multiple devices and sends the data to the cloud platform. Such a cloud proxy can comprise a dedicated data collection device, such as a proxy server that shares a network with the industrial devices. Alternatively, the cloud proxy can be a peer industrial device that collects data from other industrial devices.

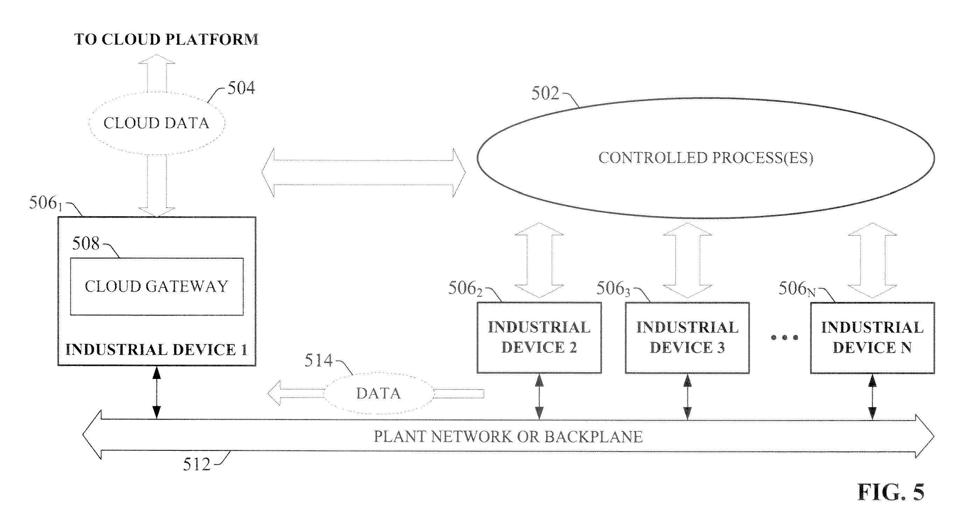

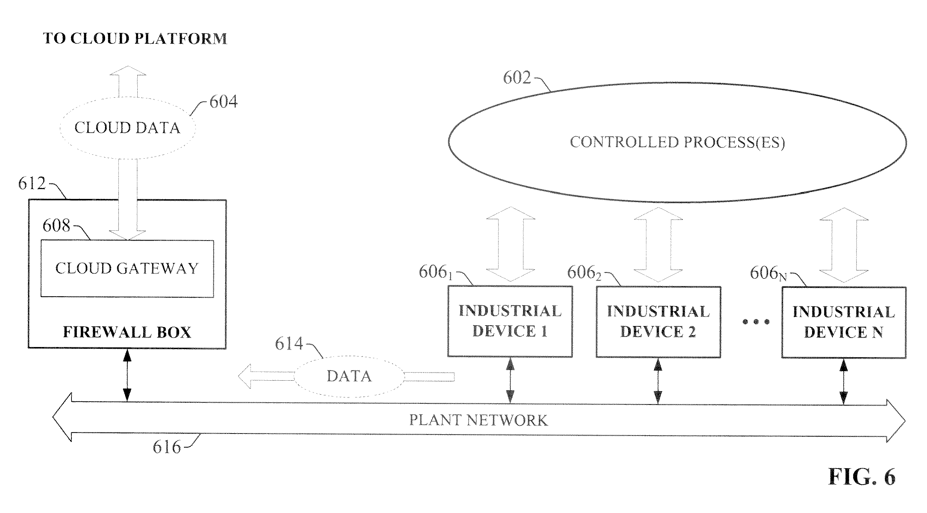

FIGs. 5 and 6 depict example techniques for migrating industrial data to the cloud platform via proxy devices for classification and analysis by the predictive maintenance system. FIG. 5 depicts a configuration in which an industrial device acts as a cloud proxy for other industrial devices comprising an industrial system. The industrial system comprises a plurality of industrial devices 506₁ - 506_{N} which collectively monitor and/or control one or more controlled processes 502. The industrial devices 506₁ - 506_{N} respectively generate and/or collect process data relating to control of the controlled process(es) 502. For industrial controllers such as PLCs or other automation controllers, this can include collecting data from telemetry devices connected to the controller's I/O, generating data internally based on measured process values, *etc.*

In the configuration depicted in FIG. 5, industrial device 506₁ acts as a proxy for industrial devices 506₂ - 506_{N}, whereby data 514 from devices 506₂ - 506_{N} is sent to the cloud via proxy industrial device 506₁. Industrial devices 506₂ - 506_{N} can deliver their data 514 to proxy industrial device 506₁ over plant network or backplane 512 (*e.g.,* a Common Industrial Protocol (CIP) network or other suitable network protocol). Using such a configuration, it is only necessary to interface one industrial device to the cloud platform (via cloud gateway 508). In some embodiments, cloud gateway 508 may perform preprocessing on the gathered data prior to migrating the data to the cloud platform (*e.g*., time stamping, filtering, formatting, summarizing, compressing, *etc.*). The collected and processed data can then be pushed to the cloud platform as cloud data 504 via cloud gateway 508. Once migrated, the cloud-based predictive maintenance system can classify the data according to the example classifications discussed above.

While the proxy device illustrated in FIG. 5 is depicted as an industrial device that itself performs monitoring and/or control of a portion of controlled process(es) 502, other types of devices can also be configured to serve as a cloud proxies for multiple industrial devices according to one or more embodiments of this disclosure. For example, FIG. 6 illustrates an embodiment in which a firewall box 612 serves as a cloud proxy for a set of industrial devices 606₁ - 606_{N}. Firewall box 612 can act as a network infrastructure device that allows plant network 616 to access an outside network such as the Internet, while also providing firewall protection that prevents unauthorized access to the plant network 616 from the Internet. In addition to these firewall functions, the firewall box 612 can include a cloud gateway 608 that interfaces the firewall box 612 with one or more cloud-based services. In a similar manner to proxy industrial device 506₁ of FIG. 5, the firewall box 612 can collect industrial data 614 from industrial devices 606₁ - 606_{N}, which monitor and control respective portions of controlled process(es) 602. Firewall box 612 can include a cloud gateway 608 that applies appropriate pre-processing to the gathered industrial data 614 prior to pushing the data to the cloud-based predictive maintenance system as cloud data 604. Firewall box 612 can allow industrial devices 606₁ - 606_{N} to interact with the cloud platform without directly exposing the industrial devices to the Internet.

In some embodiments, cloud gateways 508 or 608 can tag the collected industrial data with contextual metadata prior to pushing the data to the cloud platform. Such contextual metadata can include, for example, a time stamp, a location of the device at the time the data was generated, or other such information. In another example, some cloud-aware devices can comprise smart devices capable of determining their own context within the plant or enterprise environment. Such devices can determine their location within a hierarchical plant context or device topology. Data generated by such devices can adhere to a hierarchical plant model that defines multiple hierarchical levels of an industrial enterprise (*e.g*., a workcell level, a line level, an area level, a site level, an enterprise level, *etc.*), such that the data is identified in terms of these hierarchical levels. This can allow a common terminology to be used across an entire industrial enterprise to identify devices and their associated data. Cloud-based applications and services that model an enterprise according to such an organizational hierarchy can represent industrial controllers, devices, machines, or processes as data structures (*e.g*., type instances) within this organizational hierarchy to provide context for data generated by devices within the enterprise relative to the enterprise as a whole. Such a convention can replace the flat name structure employed by some industrial applications.

In some embodiments, cloud gateways 508 and 608 can comprise unidirectional "data only" gateways that are configured only to move data from the premises to the cloud platform. Alternatively, cloud gateways 508 and 608 can comprise bi-directional "data and configuration" gateways that are additionally configured to receive configuration or instruction data from services running on the cloud platform. Some cloud gateways may utilize store-and-forward technology that allows the gathered industrial data to be temporarily stored locally on storage associated with the cloud gateway in the event that communication between the gateway and cloud platform is disrupted. In such events, the cloud gateways will forward the stored data to the cloud platform when the communication link is reestablished.

To ensure a rich and descriptive set of data for analysis purposes, the cloud-based predictive maintenance system can collect device data in accordance with one or more standardized device models. To this end, a standardized device model can be developed for each industrial device. Device models profile the device data that is available to be collected and maintained by the predictive maintenance system.

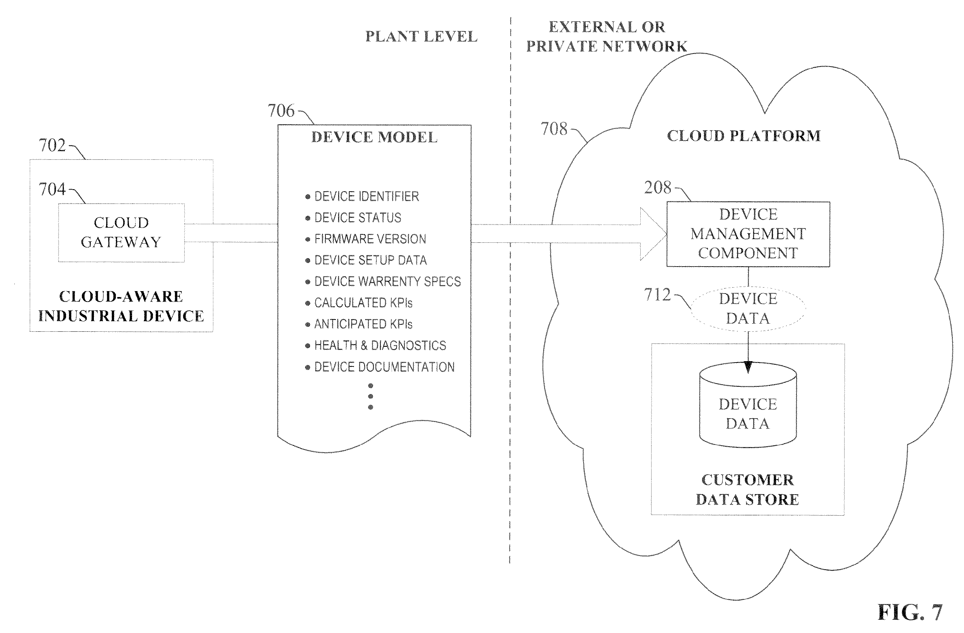

FIG. 7 illustrates an example device model according to one or more embodiments. In the illustrated example, device model 706 is associated with a cloud-aware industrial device 702 (*e.g.,* a programmable logic controller, a variable frequency drive, a human-machine interface, a vision camera, a barcode marking system, *etc*.). As a cloud-aware device, industrial device 702 can be configured to automatically detect and communicate with cloud platform 708 upon installation at a plant facility, simplifying integration with existing cloud-based data storage, analysis, and applications (*e.g.,* the predictive maintenance system described herein). When added to an existing industrial automation system, device 702 can communicate with the cloud platform and send identification and configuration information in the form of device model 706 to the cloud platform. Device model 706 can be received by a device management component 208, which then updates the customer's device data 712 based on the device model. In this way, predictive maintenance system can leverage the device model to integrate the new device into the greater system as a whole. This integration can include updating cloud-based applications to recognize the new device, adding the new device to a dynamically updated data model of the customer's industrial enterprise or plant, making other devices on the plant floor aware of the new device, or other such integration functions. Once deployed, some data items comprising device model 706 can be collected and monitored by the predictive maintenance system on a near real-time basis.

Device model 706 can comprise such information as a device identifier (*e.g.*, model and serial number), status information for the device, a currently installed firmware version, device setup data, device warranty specifications, calculated and anticipated KPIs associated with the device (*e*.*g*., mean time between failures), device health and diagnostic information, device documentation, or other such parameters.

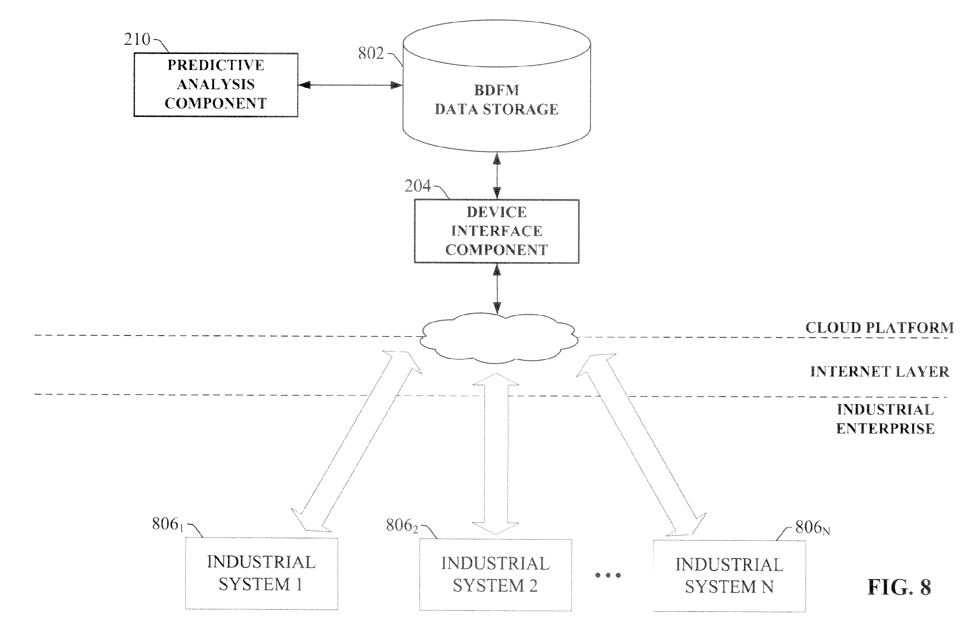

In addition to maintaining individual customer-specific data stores for each industrial enterprise, the cloud-based predictive maintenance system can also feed sets of customer data to a global data storage (referred to herein as Big Data for Manufacturing, or BDFM, data storage) for collective big data analysis in the cloud. As illustrated in FIG. 8, device interface component 204 of the predictive maintenance system can collect data from devices and assets comprising respective different industrial systems 806 for storage in cloud-based BDFM data storage 802. In some embodiments, data maintained in BDFM data storage 802 can be collected anonymously with the consent of the respective customers. For example, customers may enter into a service agreement with a technical support entity whereby the customer agrees to have their device and asset data collected by the cloud-based predictive maintenance system in exchange for predictive maintenance services. The data maintained in BDFM data storage 802 can include all or portions of the classified customer-specific data described in connection with FIG. 3, as well as additional inferred data. BDFM data storage 802 can organize the collected data according to device type, system type, application type, applicable industry, or other relevant categories. Predictive analysis component 210 can analyze the resulting multi-industy, multi-customer data store to learn industry-specific, device-specific, and/or application-specific trends, patterns, thresholds, *etc.* In general, predictive analysis component 210 can perform big data analysis on the multi-enterprise data maintained BDFM data storage to learn and characterize operational trends or patterns as a function of industry type, application type, equipment in use, asset configurations, device configuration settings, or other such variables.

For example, it may be known that a given industrial asset (*e.g.,* a device, a configuration of device, a machine, *etc*.) is used across different industries for different types of industrial applications. Accordingly, predictive analysis component 210 can identify a subset of the global data stored in BDFM data storage 802 relating to the asset or asset type, and perform analysis on this subset of data to determine how the asset or asset type performs over time for each of multiple different industries or types of industrial applications. Predictive analysis component 210 may also determine the operational behavior of the asset over time for each of different sets of operating constraints or parameters (*e.g.* different ranges of operating temperatures or pressures, different recipe ingredients or ingredient types, *etc.*). By leveraging a large amount of historical data gathered from many different industrial systems, predictive analysis component 210 can learn common operating characteristics of many diverse configurations of industrial assets at a high degree of granularity and under many different operating contexts.

Additionally, predictive analysis component 210 can learn *a priori* conditions that often presage impending operational failures or system degradations based on analysis of this global data. The knowledge gleaned through such analysis can be leveraged to detect and identify early warning conditions indicative of future system failures for a given customer's industrial system. In some embodiments, predictive analysis component 210 can compare operational behavior of similar industrial applications across different device hardware platform or software configuration settings, and make a determination regarding which combination of hardware and/or configuration settings yield preferred operational performance. Moreover, predictive analysis component 210 can compare data across different verticals to determine whether system configurations or methodologies used at one vertical could beneficially be packaged and implemented for another vertical. The predictive maintenance system could use such determinations as the basis for customer-specific recommendations. In general, BDFM data storage, together with predictive analysis component 210, can serve as a repository for knowledge capture and best practices for a wide range of industries, industrial applications, and device combinations.

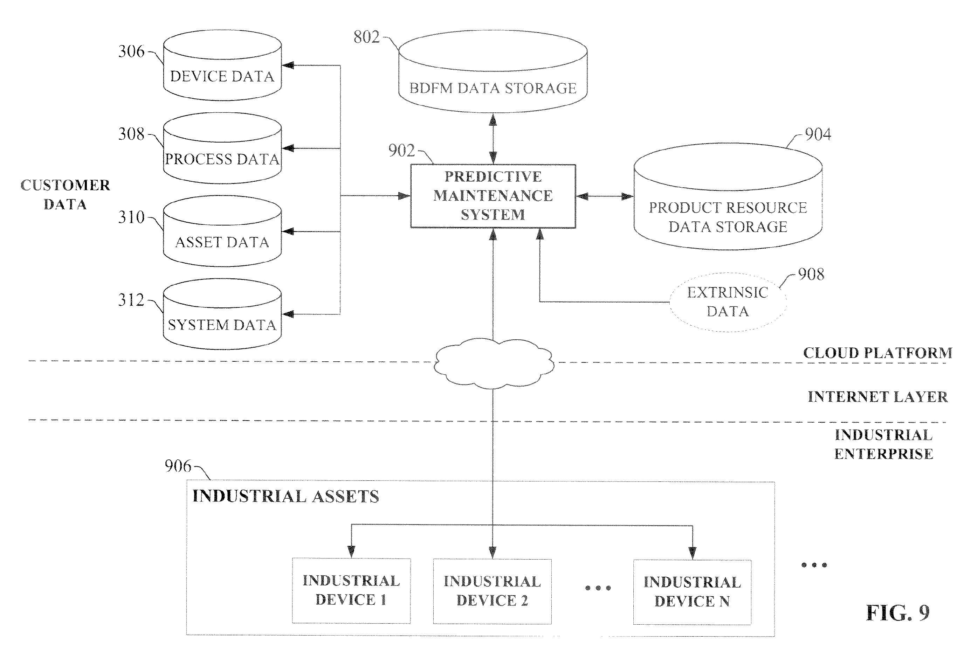

FIG. 9 illustrates a cloud-based system for providing predictive maintenance services. As noted above, predictive maintenance system 902 can collect, maintain, and monitor customer-specitic data (*e.g.* device data 306, process data 308, asset data 310, and system data 312) relating to one or more industrial assets 906 of an industrial enterprise. In addition, the predictive maintenance system can collect and organize industrial data anonymously (with customer consent) from multiple industrial enterprises in BDFM data storage 802 for collective analysis, as described above in connection with FIG. 8.

Predictive maintenance system 902 can also maintain product resource information in cloud-based product resource data storage 904. In general, product resource data storage 904 can maintain up-to-date information relating to specific industrial devices or other vendor products. Product data stored in product resource data storage 904 can be administered by one or more product vendors or original equipment manufacturers (OEMs). Exemplary device-specific data maintained by product resource data storage 904 can include product serial numbers, most recent firmware revisions, preferred device configuration settings and/or software for a given type of industrial application, or other such vendor-provided information.

Additionally, one or more embodiments of cloud-based predictive maintenance system 902 can also leverage extrinsic data 908 collected from sources external to the customer's industrial enterprise, but which may have relevance to operation of the customer's industrial systems. Example extrinsic data 908 can include, for example, energy cost data, material cost and availability data, transportation schedule information from companies that provide product transportation services for the customer, market indicator data, web site traffic statistics, information relating to known information security breaches or threats, or other such information. Cloud-based predictive maintenance system 902 can retrieve extrinsic data 908 from substantially any data source; *e.g.*, servers or other data storage devices linked to the Internet, cloud-based storage that maintains extrinsic data of interest, or other sources

The system depicted in FIG. 9 can provide predictive maintenance services to subscribing customers (*e.g.,* owners of industrial assets 906). For example, customers may enter an agreement with a product vendor or technical support entity to allow their system data to be gathered anonymously and fed into BDFM data storage 802, thereby expanding the store of global data available for collective analysis. In exchange, the vendor or technical support entity can agree to provide customized predictive maintenance services to the customer (*e.g*., real-time system monitoring, automated email alerting services, automated technical support notification, *etc.*). Alternatively, the customer may subscribe to one or more available preventative maintenance services, and optionally allow their system data to be maintained in BDFM data storage 802. In some embodiments, a customer may be given an option to subscribe to predictive maintenance services without permitting their data to be stored in BDFM data storage 802 for collective analysis with data from other systems. In such cases, the customer's data will only be maintained as customer data *(e.g.,* in customer data store 302) for the purposes of identifying maintenance issues and upgrade opportunities, and the collected customer data will be analyzed in view of BDFM data storage 802 and product resource data storage 904 without being migrated to BDFM data storage for long-term storage and analysis. In another exemplary agreement, customers may be offered a discount on predictive maintenance services in exchange for allowing their system data to be anonymously migrated to BDFM data storage 802 for collective analysis.

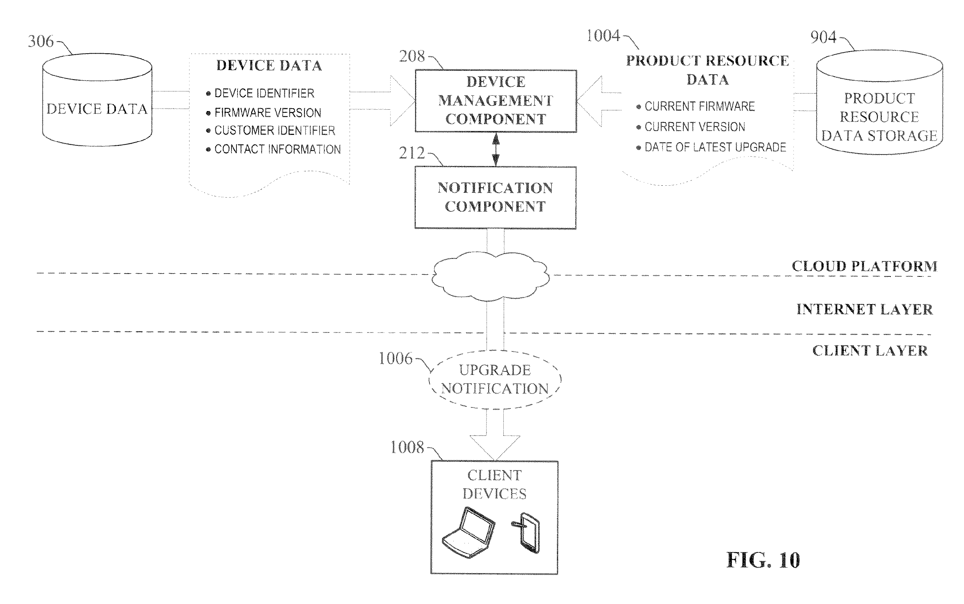

The system depicted in FIG. 9 can offer a variety of predictive maintenance services to owners of industrial assets 906. For example, since the predictive maintenance system maintains accurate and detailed documentation of each customer's devices, assets, and system configurations on cloud storage, the predictive maintenance system can automatically manage device firmware and software across the various devices comprising the user's industrial assets. FIG. 10 depicts an example scenario in which a cloud-based predictive maintenance system is used to track and manage industrial device firmware upgrades. As described in previous examples, device data 306 is collected from various devices and assets comprising a user's industrial automation systems and maintained on cloud-based storage. Device data 306 is stored in association with a customer model (*e.g.,* customer model 304 of FIG. 3), which specifies a customer identifier, customer contact information, notification preferences, and active service contact information for the customer.

At periodic intervals (or in response to detection of a new device being deployed at the customer premises), device management component 208 can retrieve a subset of the device data 306 relating to a particular device from the customer's data store *(e.g.,* customer data store 302 of FIG. 3). The data can specify, for example, a device identifier and a current firmware version detected for the device. Additionally, device management component 208 can inspect the customer identifier, contact information, and service contract information maintained in the customer model.

Device management component 208 can then cross-reference the retrieved device identifier with product resource data storage 904 to determine whether the firmware version currently installed on the device is up-to-date. As noted above, product resource data storage 904 can include vendor-provided product information regarding current firmware versions, software versions, hardware versions, *etc*. Accordingly, device management component 208 can retrieve product resource data 1004 for the device identified by the retrieved device identifier, compare the firmware version number retrieved from device data 306 with the most recent firmware version number indicated by product resource data 1004, and make a determination regarding whether the on-premises device is using the most recent firmware version.

The system response to a determination that the on-premises device is running an out-of-date firmware version can depend on the service contract information maintained in the customer model. For example, depending on the service agreement, notification component 212 may deliver a notification 1006 to one or more client devices 1008 (specified in the customer model) that a more recent firmware version is available for the industrial device. The notification may include a list of new or modified features made available by the new firmware version. If the customer's service plan does not include automated firmware upgrades, the notification may direct the user to a website or other location where the new firmware can be purchased and obtained. Alternatively, the firmware may be provided automatically to the user in accordance with the pre-existing service plan. In another scenario, for cloud-aware industrial devices that include bi-directional cloud gateways, device management component 208 may remotely deliver and install the most recent firmware version to the device automatically from the cloud platform (*e.g.,* via device interface component 204).

In one or more embodiments, the decision to upgrade to the most recent firmware version may be dependent upon supplemental knowledge learned through analysis of BDFM data storage 802. For example, predictive analysis component 210 may determine - based on an analysis of device, asset, process, and system data collected from multiple industrial enterprises and stored in BDFM data storage 802 - that certain system configurations for a given type of industrial application experience performance problems or recurring faults if a particular firmware version is used in one of the system devices *(e.g.,* a PLC, a VFD, *etc*.). These faults may be due to an incompatibility between the firmware version and other firmware installed on a neighboring device that interacts with the device in question. The issue may also be due to a fault inherent to the firmware that manifests when the device is operated in a particular mode. Accordingly, device management component 208 can learn of such firmware incompatibilities based on the analysis performed by predictive analysis component 210, and tailor customer notifications accordingly. For example, if device management component 208 determines (based on an analysis of device data 306) that the customer is using a firmware version known to produce substandard operation when used in the particular context of the customer's system, notification component 212 may deliver a notification recommending that an earlier or newer firmware version should be installed on the device. Thus, device management component 208 and predictive analysis component 210 can analyze customer-specific data within the context of a global device repository maintained in BDFM data storage to provide intelligent device configuration recommendations to the customer. In this way, the predictive maintenance system relieves plant personnel of the burden of tracking and managing firmware versions across their numerous industrial assets.

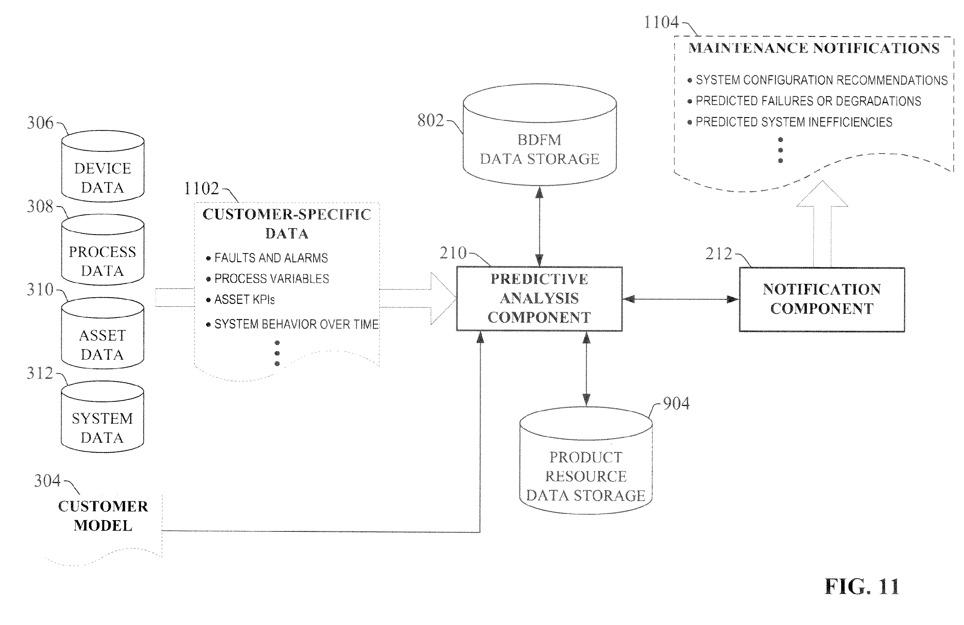

In addition to management of firmware, embodiments of the predictive maintenance system can also assess other aspects of a customer's devices and assets within the context of their larger industrial systems, and generate targeted recommendations for improving overall system performance. FIG. 11 illustrates generation of proactive notifications by the cloud-based predictive maintenance system. Predictive analysis component 210 can perform big data analysis on customer-specific data 1102 retrieved from a customer's collected device data 306, process data 308, asset data 310, and/or system data 312. The analysis can include correlation of the customer-specific data 1102 with global system data maintained in BDFM data storage 802 and vendor- or OEM-provided device information maintained in product resource data storage 904.

As noted above, customer-specific data 1102 can include device and/or asset level faults and alarms, process variable values (*e.g.*, temperatures, pressures, product counts, cycle times, *etc.*), calculated or anticipated key performance indicators for the customer's various assets, indicators of system behavior over time, and other such information. Customer-specific data 1102 can also include documentation of firmware versions, configuration settings, and software in use on respective devices of the customer's industrial assets. Moreover, predictive analysis component 210 can take into consideration customer information encoded in customer model 304, which may have a bearing on inferences made by the big data analysis. For example, customer model 304 may indicate a type of industry that is the focus of the customer's business (*e.g.*, automotive, food and drug, oil and gas, fibers and textiles, power generation, marine, *etc*.). Knowledge of the customer's industry can allow predictive analysis component 210 to correlate the customer-specific data 1102 with data relating to similar systems and applications in the same industry, as documented in BDFM data storage 802.

Taken together, customer-specific data 1102 and customer model 304 can accurately model the customer's industrial enterprise at a highly granular level, from high-level system behavior over time down to the device software level. Analyzing this customer-specific data 1102 in view of global industry-specific and application-specific trends learned via analysis of BDFM data storage 802, as well as vendor-provided device information maintained in product resource data storage 904, can facilitate generation of focused, proactive maintenance notifications 1104 tailored to the customer's unique industrial applications.

Pursuant to an example, based on correlation of customer-specific data 1102 with data maintained in BDFM data storage 802 and product resource data storage 904, predictive analysis component 210 can determine that certain aspects of the customer's system configuration could be modified to improve performance (*e.g.*, increase product throughput, decrease cycle times, reduce downtime instances, *etc*.). Predictive analysis component 210 can make this determination based in part on a comparison between customer-specific data 1102 and subsets of data in BDFM data storage 802 collected anonymously from other customers using similar industrial assets within the same industry. For example, predictive analysis component 210 may learn, via analysis of BDFM data storage 802, that customers using particular device models, firmware revisions, device configuration settings, *etc.,* experience fewer instances of a particular fault condition. Predictive analysis component 210 may further determine that customer-specific data 1102 indicates an above average frequency of the particular fault condition. Accordingly, predictive analysis component 210 may instruct notification component 210 to generate a maintenance notification recommending a system configuration modification that will bring the customer's system more in line with a preferred configuration learned via analysis of BDFM data storage 802.

In another example, predictive analysis component 210 may identify an impending system or device failure based on an observation of system behavior over time correlated with learned system performance indicators that typically presage such failures. Predictive analysis component 210 can learn these critical system performance indicators through pattern recognition analysis performed on BDFM data storage 802. These failure notifications can be scoped as low as the device level *(e.g.,* an impending failure of a single industrial device, such as a motor controller, a PLC, a telemetry device, *etc.*) or can relate to higher asset or system level failures *(e.g.,* an impending degradation of product throughput or cycle time for a packaging line due to a confluence of operating factors).

For example, using pattern recognition analysis on BDFM data storage 802, predictive analysis component 210 may learn that a particular configuration of devices and assets used to implement a given pharmaceutical batch process consistently experiences a reduction in throughput shortly after detection of a particular operating or quality factor (*e.g.*, an elevated temperature at a certain station, a detected trend in certain product quality measurements, *etc.*), or a combination of such factors. When these factors are detected in customer-specific data 1102, predictive analysis component 210 can instruct notification component 212 to deliver a maintenance notification indicating the source of the issue and the potential failure that may result if the issue is not resolved. By leveraging the knowledge captured in BDFM data storage 802 and analyzed by predictive analysis component 210, targeted maintenance notifications can be delivered preemptively to owners of industrial assets before maintenance issues become critical.

Some embodiments of the cloud-based predictive maintenance system can also apply predictive analysis to assist the customer in optimizing their product quality and throughput. For example, based on steady-state analysis of the customer data (*e*.*g*., device data 306, process data 308, asset data 310, and system data 312), predictive analysis component 210 can anticipate critical variations in operation of the customer's industrial assets that will take the controller process outside a desirable batch output. These critical variations can be determined based on thresholds learned through big data analysis of BDFM data storage 802, and in particular analysis of operational data collected anonymously from similar industrial applications using similar equipment and device configurations. Based on analysis of BDFM data storage 802. for example, predictive analysis component 210 may determine a correlation between excessive pressure values at a particular station during a given stage of a batch process and subsequent performance inefficiencies (*e.g.*, reduced batch output, increased cycle times, increased downtime occurrences, negative impact on key performance indicators, *etc*.). Once these critical variations have been identified, predictive analysis component 210 can analyze customer-specific data to anticipate when the customer's particular system is at risk of exceeding these critical variations (*e.g.*, determine whether a pressure at an analogous station of the customer's system is trending toward a determined critical threshold). In response, notification component 212 can generate a maintenance recommendation indicating a process adjustment designed to keep the critical process variables within a preferred window determined to mitigate the predicted inefficiency.

In some embodiments, rather than or in addition to issuance of the notification, the predictive maintenance system may automatically implement the recommended changes on the customer's equipment via the cloud. For example, if the relevant industrial devices are running a bi-directional cloud gateway, cloud-based predictive maintenance system can issue instructions or configuration data to the devices (*e.g.,* using device interface component 204) that implement the recommended adjustment on the device. Such remotely administered instructions can implement set point adjustments, alter configuration settings, *etc.*

Notification component 210 can deliver maintenance notifications 1104 in accordance with notification preferences specified in customer model 304. These notification preferences can be defined as a function of the type of maintenance issue for which a notification is to be generated. For example, customer model 304 may specify that notifications relating to an impending device failure should be delivered to one or more client devices associated with selected maintenance personnel, while notifications relating to firmware upgrades or recommended device reconfigurations should be delivered to a client device associated with a plant engineer. Notification preferences defined in the customer model may also be a function of a particular plant facility, area, or workcell to which the notification relates. Once the appropriate client devices to be notified have been determined, notification component 212 can deliver maintenance notifications 1104 to the one or more notification destinations. The notifications can be sent to identified Internet-capable client devices, such as phones, tablet computers, desktop computers, or other suitable devices.

In some embodiments, a cloud application running on the cloud platform can provide a mechanism for notified personnel to communicate with one another via the cloud *(e.g.,* establish a conference call using Voice-over-IP). Notification component 212 can also be configured to send the notifications 1104 periodically at a defined frequency until the receiver positively responds to the notification (*e.g*., by sending a manual acknowledgement via the client device). In some embodiments, notification component 212 can be configured to escalate an urgency of high-priority notifications if an acknowledgment is not received within a predetermined amount of time. This urgency escalation can entail sending the notifications at a gradually increasing frequency, sending the notifications to devices associated with secondary personnel if the primary personnel do not respond within a defined time period, or other such escalation measures.

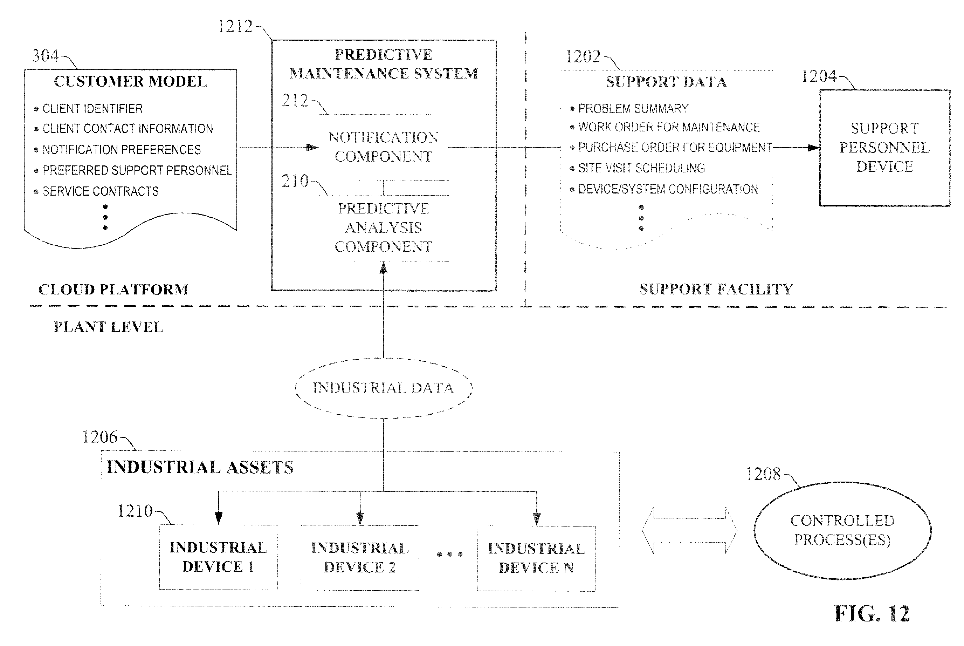

In addition to providing automated maintenance notification services, one or more embodiments of the cloud-based predictive maintenance system can also facilitate proactive involvement of technical support personnel in response to impending device failures or other system problems detected via the predictive analysis techniques described above. FIG. 12 illustrates an example architecture in which the predictive maintenance system facilitates involvement of a technical support entity to proactively mitigate impending system failures. In this example, one or more controlled processes 1208 are monitored and/or controlled by one or more industrial assets 1206, which comprise one or more industrial devices 1210. Industrial devices 1210 can comprise, for example, industrial controllers, sensors, meters, motor drives, or other such devices. As described in previous examples, a cloud-based predictive maintenance system 1212 can collect industrial data from the devices 1210 comprising industrial assets 1206 and store the data in customer-specific cloud storage (not shown) according to a hierarchical classification structure. Industrial devices 1210 can provide their data to the cloud platform via individual cloud gateways executing on the devices, or via a proxy device (*e.g*., another industrial device, a dedicated server, a network infrastructure device, *etc.*) that runs such a cloud gateway.

As described above, predictive analysis component 210 can monitor the collected industrial data substantially in real-time and identify conditions indicative of an impending device or system failure or inefficiency. Predictive analysis component 210 can determine such conditions, for example, based on a correlation of the collected industrial data with data maintained in cloud-based BDFM and product resource data stores, as described *supra*. Depending on the type of problem identified and the nature of the service agreement between the customer and the technical support entity, notification component 212 may initiate contact with customer support personnel in response to detection of an impending maintenance issue. For example, in response to prediction of an device or system failure by predictive analysis component 210, notification component 212 can access customer model 304 to determine the type of service contract active for the customer. If the customer service contract does not support automated personal technical support, notification component 212 may only send a notification of the predicted maintenance issue to plant personnel, including details regarding the nature of the problem and possible countermeasures (*e.g.*, replacement of a degraded piece of equipment, adjustment of a setpoint value, reduction of a rate of machine output to extend the life of a worn component, *etc*.).

Alternatively, if the service contract entitles the customer to automated personal support, notification component 212 may send a notification to technical support personnel at a support facility apprising of the detected maintenance issue. The notification can include support data 1202 derived from the customer model 304 and the collected customer data in order to quickly convey the nature of the issue to the technical support personnel. Thus, by virtue of the predictive analysis functions combined with the detailed profile of the customer's industrial assets maintained in the cloud-based customer data store, embodiments of cloud-based predictive maintenance system can automatically communicate detailed information regarding the nature of the predicted problem, the industrial devices in use at the customer's facility, the configuration settings of those devices, the relationships between the devices, the customer's industrial concern, and other relevant information. Predictive maintenance system 1212 can thus provide accurate customer-specific information to the technical support facility without reliance upon plant personnel to convey details of the customer's particular automation systems.

Support data 1202 can be delivered to one or more selected support personnel devices 1204 *(e.g.,* a technical support workstation or portable device). In some scenarios, selection of appropriate support personnel can be a function of the nature of the predicted issue; that is, notification component 212 can route the notification and associated support data 1202 to a technical support engineer known to possess expertise in the relevant industry and/or devices of concern. Destinations for the technical support notification can also be based on support preferences specified in customer model 304. For example, customer model 304 may define a preferred technical support engineer to be notified in the event of a detected maintenance issue, or maintain a history of previous customer interactions with the technical support entity. Notification component 212 may select suitable destinations for support notifications based in part on these factors. Depending on the nature of the anticipated maintenance issue, customer support personnel may then proactively initiate contact with relevant plant personnel to discuss possible countermeasures for the predicted maintenance concern.

Predictive maintenance system 1212 may support other types of interaction with the support facility to facilitate automated proactive countermeasures in response to predicted maintenance issues. For example, in some embodiments, identification of an impending equipment failure may cause the notification component 212 to automatically generate and issue a purchase order for replacement equipment. Copies of the purchase order can be delivered to the technical support facility as well as relevant plant personnel at the customer premises. Automated generation of a purchase order can be dependent upon an existing service agreement between the customer and the technical support entity permitting such work orders to be automatically generated and drawn against the customer's business account. Since the cloud-based predictive maintenance system has detailed knowledge of the customer's equipment and current device configurations, technical support personnel can leverage this customer-specific information to pre-configure the replacement device or equipment before shipping the replacement to the customer facility. In this way, predictive maintenance system 1212 can facilitate rapid and automated device replacement before failure occurs. In another example, the replacement device can be delivered to the customer site unconfigured (e.g. configured with default settings). When the replacement device is deployed on the customer's system and interfaced with the cloud, the replacement device can initiate an automatic configuration routine that leverages the configuration data previously collected in the cloud platform from the original device. In this way, the configuration data for the original device can be retrieved from the cloud platform and applied to the replacement device.

In another example, if predictive maintenance system 1212 determines that the predicted maintenance issue requires an on-site visit by technical support personnel, notification component 212 can automatically schedule a technical support representative to be dispatched to the customer facility. As with previous examples, predictive maintenance system 1212 can provide the technical support personnel with relevant details of the customer's particular system and the nature of the predicted maintenance issue, and generate any necessary work orders in connection with dispatching a service engineer to the customer facility. Thus, predictive maintenance system 1212 can provide automated monitoring and maintenance of a customer's industrial systems even in the absence of plant personnel who possess sufficient knowledge of on-site assets.

In some embodiments, predictive maintenance analysis may not be limited to analysis of data collected from the industrial assets, but instead may be expanded to include supplemental information obtained from other sources. For example, observed or inferred human behavior may be taken into account when determining whether a maintenance countermeasure should be initiated. To this end, predictive maintenance services running on the cloud platform can monitor human-behavior activity either directly or by inference. This can include monitoring an operator's location relative to a particular industrial asset *(e.g.,* by tracking a personal device carried by the operator). In an example scenario, if the predictive maintenance system determines, based on this location information, that the operator is spending an excessive amount of time near a particular service panel or operator terminal, the system may infer that there is an elevated likelihood of a machine problem. In this regard, the predictive maintenance system may infer that visual clues noticeable by the operator (but invisible to the cloud-based services) have caused the operator to spend an inordinate amount of time at the service panel or operator terminal. The system can also infer a possible nature of the problem based on the function of the panel/terminal.

In another scenario, the predictive maintenance system may observe that an operator is navigating to a particular troubleshooting screen of a human-machine interface (HMI) at an increased frequency, leading the system to conclude that an abnormal machine behavior is directing the operator to review the troubleshooting screen more frequently. Such directly monitored and inferred operator behaviors can be considered by the predictive maintenance system in order to determine a risk of a particular device or machine failure.

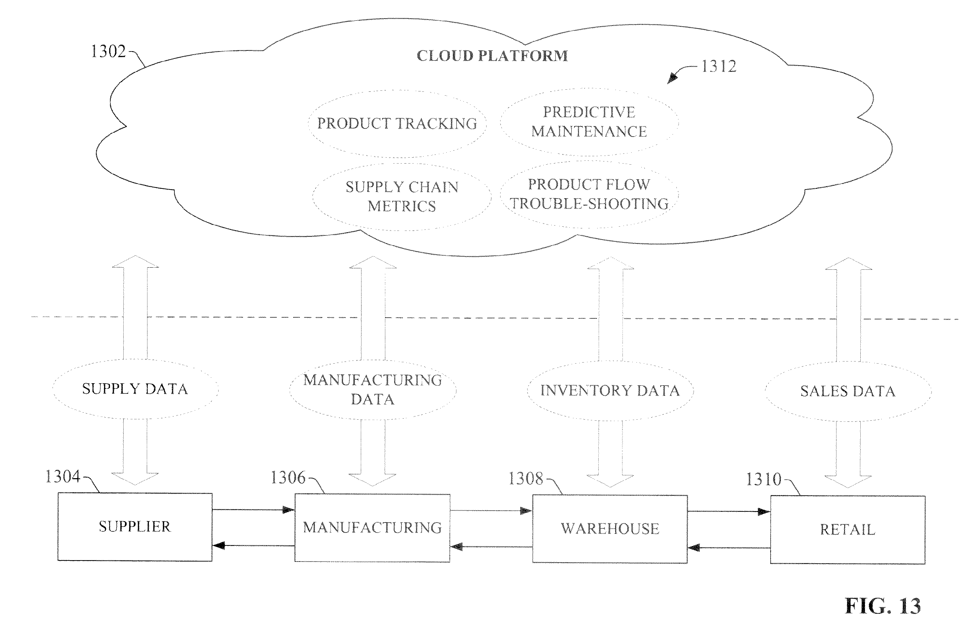

Since the cloud-based predictive maintenance system described herein can associate geographically diverse data with a customer identifier (*e.g.*, customer model 304) and aggregate this data in a cloud platform, the system can take advantage of the large amounts of diverse data from all stages of a supply chain to identify factors at one stage that impact quality elsewhere in the chain. This can include collection and analysis of data from material or parts suppliers, distributors, inventory, sales, and end-user feedback on the finished product. FIG. 13 illustrates an exemplary cloud-based architecture for tracking product data through an industrial supply chain and predicting quality concerns at the supply-chain level. A simplified supply chain can include a supplier 1304, a manufacturing facility 1306, a warehouse 1308, and a retail entity 1310. However, the supply chain can comprise more or fewer entities without departing from the scope of this disclosure. For simplicity, FIG. 13 depicts a single block for each supply chain entity. However, it is to be appreciated that a given supply chain can comprise multiple entities for each entity type. For example, a manufacturing facility may rely on materials provided by multiple suppliers. Likewise, the supply chain may include multiple warehouse entities to provide storage for various products produced by the manufacturing facility, and multiple retail entities for selling the products to end customers.

The various supply chain entities can generate a large amount of data in connection with their roles in the supply chain. For example, supplier 1304 and manufacturing facility 1306 can include plant floor devices that generate near real-time and historical industrial data relating to production of the materials or products, as well as business-level information relating to purchase orders, intakes, shipments, enterprise resource planning (ERP), and the like. Warehouse 1308 can maintain records of incoming and outgoing product and track inventory levels for respective products. Retail entity 1310 can track sales, retail inventory, financial information, demand metrics, and other such information. Additional information relating to transportation of materials or products between stages of the supply chain can also be generated, including but not limited to geographical location obtained from global positioning systems.

According to one or more embodiments, data sources associated with each of the supply chain entities can provide industrial or business data to cloud platform 1302 to facilitate cloud-based tracking of products through the supply chain and prediction of potential quality issues. Cloud platform 1302 can execute a number of services that aggregate and correlate data provided by the various supply chain stages, and provide information about a product's state within the supply chain based on the analysis. These cloud-based services can include, but are not limited to, tracking the product's physical location within the supply chain, providing metrics relating to the flow of products through the supply chain, or identifying and troubleshooting current and predicted inefficiencies in product flows through the supply chain.

In a non-limiting example, cloud-based services 1312 may note a spike in negative feedback from purchasers of the end product (*e.g*., based on survey data collected from retail entity 1310). Using analytics similar to those described in previous examples, cloud-based predictive maintenance services can trace the cause of the reported quality issue to changes made to an upstream process of the supply chain, such as a new material supplier 1304 providing an inferior ingredient, an equipment upgrade at the manufacturing facility 1306 that may have had an impact on product quality, or other such factor. Analysis at the supply-chain level can involve analysis over longer durations than those involve for plant-level or batch-level troubleshooting, since supply-chain characteristics are characterized by data collected throughout the supply chain workflow.

In addition to the predictive maintenance features described above, collection of a customer's device, asset, process, and system data in the cloud platform in association with a customer model establishes a framework for other types of services. For example, a cloud-based advertising system can generate target advertisements based on a customer's current devices in service, known customer preferences stored in the customer model, or other factors obtainable from the customer's data store. Such advertisements could direct customers to alternative devices that could replace, supplement, or enhance their existing equipment.

Moreover, the volume of customer-specific data and diverse global data gathered and maintained by the cloud-based predictive maintenance system can be leveraged to generate reports that offer multi-dimensional views of a customer's industrial assets and processes. For example, based on analysis of the data maintained in the customer data stores, the cloud-based services can calculate or anticipate customer-specific KPIs for a given industrial system or asset. Additionally, reports can be generated that benchmark these customer-specific KPIs against the global, multi-customer data set maintained in the BDFM data store.

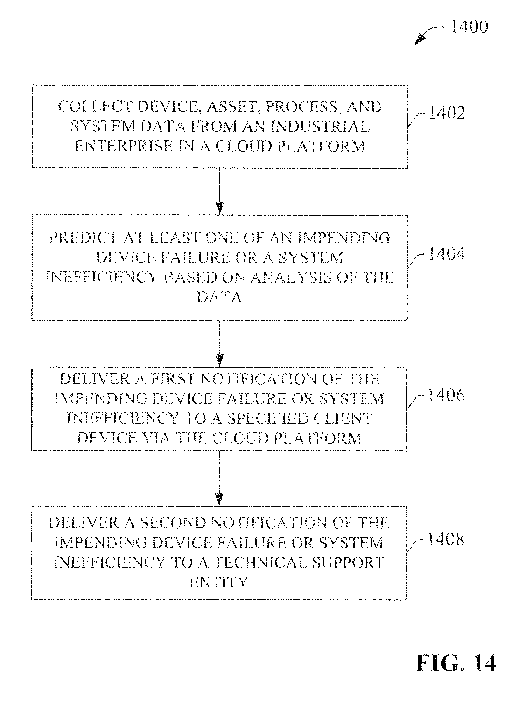

FIGs 14-15 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 14 illustrates an example methodology 1400 for delivering predictive maintenance notifications based on cloud-based monitoring of industrial systems. Initially, at 1402, device, asset, process, and system data from an industrial enterprise are collected in a cloud platform. The data can be migrated to the cloud using one or more cloud gateways that serve as uni-directional or bi-directional communication interfaces between industrial devices and the cloud platform. The device, asset, process, and system data can be stored in association with a customer identifier and other customer-specific information on cloud storage.

At 1404, at least one of an impending device failure or a system inefficiency is predicted based on an analysis of the data collected at step 1402. The prediction can be based in part on big data analysis performed on a global set of industrial data collected anonymously (with consent) from multiple industrial enterprises across different industries. At 1406, a first notification of the impending device failure or system inefficiency is delivered to a specified client device via the cloud platform. At 1408, a second notification of the impending device failure or system inefficiency is delivered to a technical support entity to facilitate proactive response to the detected issue.

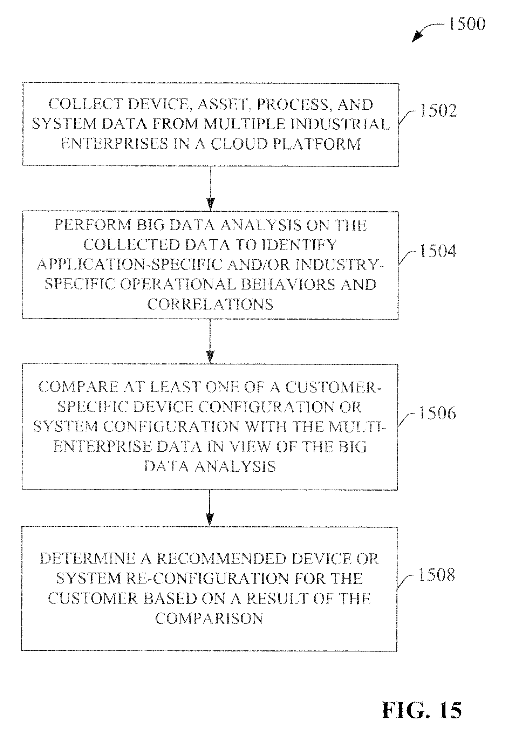

FIG. 15 illustrates an example methodology 1500 for determining a recommended device or system recommendation based on big data analysis performed in a cloud platform. Initially, at 1502, device, asset, process, and system data is collected from multiple industrial enterprises in a cloud platform. At 1504, big data analysis is performed on the collected data to identify application-specific and/or industry-specific operational behaviors and correlations. For example, subsets of the collected data relating to the use of certain industrial assets to carry out a particular industrial application are analyzed, and correlations between system performance metrics and system configuration aspects (*e.g*., device settings, hardware types, firmware versions, *etc.*) are identified based on the analysis.

At 1506, at least one of a customer-specific device configuration or a customer-specific system configuration is compared with the multi-enterprise data collected at step 1502. The comparison is made in view of the analysis results obtained at 1504, so that a determination can be made regarding whether the customer's operational performance can be improved by altering the customer's current system configuration. At 1508, a recommended device or system reconfiguration is determined for the customer based on a result of the comparison.

Embodiments, systems, and components described herein, as well as industrial control systems and industrial automation environments in which various aspects set forth in the subject specification can be carried out, can include computer or network components such as servers, clients, programmable logic controllers (PLCs), automation controllers, communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

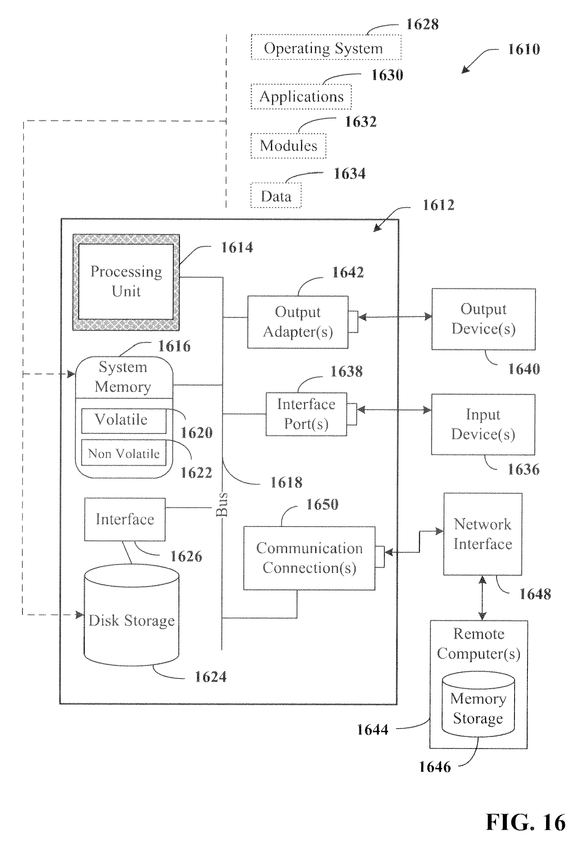

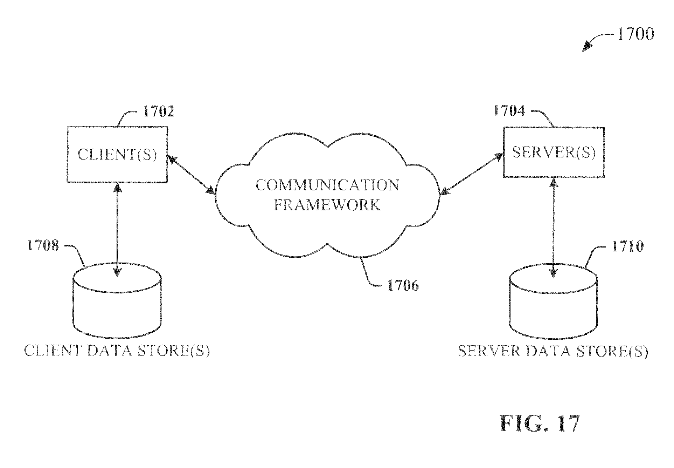

In order to provide a context for the various aspects of the disclosed subject matter, FIGs. 16 and 17 as well as the following discussion are intended to provide a brief, general description of a suitable environment in which the various aspects of the disclosed subject matter may be implemented.

With reference to FIG. 16, an example environment 1610 for implementing various aspects of the aforementioned subject matter includes a computer 1612. The computer 1612 includes a processing unit 1614, a system memory 1616, and a system bus 1618. The system bus 1618 couples system components including, but not limited to, the system memory 1616 to the processing unit 1614. The processing unit 1614 can be any of various available processors. Multi-core microprocessors and other multiprocessor architectures also can be employed as the processing unit 1614.

The system bus 1618 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1616 includes volatile memory 1620 and nonvolatile memory 1622. The basic input/output system (BIOS), containing the basic routines to transfer information between elements within the computer 1612, such as during start-up, is stored in nonvolatile memory 1622. By way of illustration, and not limitation, nonvolatile memory 1622 can include read only memory (ROM), programmable ROM (PROM), electrically programmable ROM (EPROM), electrically erasable PROM (EEPROM), or flash memory. Volatile memory 1620 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1612 also includes removable/non-removable, volatile/nonvolatile computer storage media. FIG. 16 illustrates, for example a disk storage 1624. Disk storage 1624 includes, but is not limited to, devices like a magnetic disk drive, floppy disk drive, tape drive, Jaz drive, Zip drive, LS-100 drive, flash memory card, or memory stick. In addition, disk storage 1624 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1624 to the system bus 1618, a removable or non-removable interface is typically used such as interface 1626.

It is to be appreciated that FIG. 16 describes software that acts as an intermediary between users and the basic computer resources described in suitable operating environment 1610. Such software includes an operating system 1628. Operating system 1628, which can be stored on disk storage 1624, acts to control and allocate resources of the computer 1612. System applications 1630 take advantage of the management of resources by operating system 1628 through program modules 1632 and program data 1634 stored either in system memory 1616 or on disk storage 1624. It is to be appreciated that one or more embodiments of the subject disclosure can be implemented with various operating systems or combinations of operating systems.

A user enters commands or information into the computer 1612 through input device(s) 1636. Input devices 1636 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1614 through the system bus 1618 *via* interface port(s) 1638. Interface port(s) 1638 include, for example, a serial port, a parallel port, a game port, and a universal serial bus (USB). Output device(s) 1640 use some of the same type of ports as input device(s) 1636. Thus, for example, a USB port may be used to provide input to computer 1612, and to output information from computer 1612 to an output device 1640. Output adapters 1642 are provided to illustrate that there are some output devices 1640 like monitors, speakers, and printers, among other output devices 1640, which require special adapters. The output adapters 1642 include, by way of illustration and not limitation, video and sound cards that provide a means of connection between the output device 1640 and the system bus 1618. It should be noted that other devices and/or systems of devices provide both input and output capabilities such as remote computer(s) 1644.

Computer 1612 can operate in a networked environment using logical connections to one or more remote computers, such as remote computer(s) 1644. The remote computer(s) 1644 can be a personal computer, a server, a router, a network PC, a workstation, a microprocessor based appliance, a peer device or other common network node and the like, and typically includes many or all of the elements described relative to computer 1612. For purposes of brevity, only a memory storage device 1646 is illustrated with remote computer(s) 1644. Remote computer(s) 1644 is logically connected to computer 1612 through a network interface 1648 and then physically connected *via* communication connection 1650. Network interface 1648 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1650 refers to the hardware/software employed to connect the network interface 1648 to the system bus 1618. While communication connection 1650 is shown for illustrative clarity inside computer 1612, it can also be external to computer 1612. The hardware/software necessary for connection to the network interface 1648 includes, for exemplary purposes only, internal and external technologies such as, modems including regular telephone grade modems, cable modems and DSL modems, ISDN adapters, and Ethernet cards.

FIG. 17 is a schematic block diagram of a sample computing environment 1700 with which the disclosed subject matter can interact. The sample computing environment 1700 includes one or more client(s) 1702. The client(s) 1702 can be hardware and/or software (*e.g.*, threads, processes, computing devices). The sample computing environment 1700 also includes one or more server(s) 1704. The server(s) 1704 can also be hardware and/or software (*e.g.*, threads, processes, computing devices). The servers 1704 can house threads to perform transformations by employing one or more embodiments as described herein, for example. One possible communication between a client 1702 and servers 1704 can be in the form of a data packet adapted to be transmitted between two or more computer processes. The sample computing environment 1700 includes a communication framework 1706 that can be employed to facilitate communications between the client(s) 1702 and the server(s) 1704. The client(s) 1702 are operably connected to one or more client data store(s) 1708 that can be employed to store information local to the client(s) 1702. Similarly, the server(s) 1704 are operably connected to one or more server data store(s) 1710 that can be employed to store information local to the servers 1704.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g.*, a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g*., hard disk, floppy disk, magnetic strips...), optical disks [*e.g.*, compact disk (CD), digital versatile disk (DVD)...], smart cards, and flash memory devices (*e.g.*, card, stick, key drive...).

### The following is a list of further preferred embodiments of the invention:

Embodiment 1. A system for performing predictive analysis on industrial data, comprising:
   a memory that stores computer-executable components;
   a processor, operatively coupled to the memory, that executes computer-executable components, the computer-executable components comprising:
      a device interface component configured to collect industrial data from a set of devices comprising an industrial control system and store the industrial data on a cloud platform; and
      a predictive analysis component configured to predict a performance problem of the industrial control system based on analysis of the industrial data.
Embodiment 2. The system of embodiment 1, wherein the device interface component is further configured to store the industrial data on the cloud platform in association with a customer identifier.
Embodiment 3. The system of embodiment 2, further comprising a notification component configured to send a notification to a client device associated with the customer identifier in response to prediction of the performance problem.
Embodiment 4. The system of embodiment 1, wherein the industrial data comprises firmware data that indicates a current firmware revision for a device of the set of devices, and the predictive analysis component is further configured to determine whether a different available firmware version will bring a performance metric of the industrial control system within a defined range.
Embodiment 5. The system of embodiment 4, wherein the predictive analysis component is further configured to determine that the different available firmware version will improve the performance metric based on an analysis of at least a subset of the industrial data with multi-enterprise data collected from multiple industrial systems.
Embodiment 6. The system of embodiment 1, wherein the device interface component is further configured to classify the industrial data according to at least one of a device class, a process class, an asset class, or a system class.
Embodiment 7. The system of embodiment 1, wherein the device interface component is further configured to collect multi-enterprise data from a plurality of industrial systems and to store the multi-enterprise data on the cloud platform.
Embodiment 8. The system of embodiment 7, wherein the predictive analysis component is further configured to perform analysis on the multi-enterprise data to identify an operational trend as a function of at least one of an industry type, an industrial application type, a industrial asset configuration, an equipment type, an industrial device configuration setting, a firmware version, or a software version.
Embodiment 9. The system of embodiment 8, wherein the predictive analysis component is further configured to predict at least one of a device failure or a performance degradation of the industrial control system based on a comparison of the industrial data for the industrial control system with the operational trend determined via analysis of the multi-enterprise data.
Embodiment 10. The system of embodiment 8, wherein the predictive analysis component is further configured to identify at least one of a hardware modification or a software modification that will improve operation of the industrial control system based on a comparison of the industrial data for the industrial control system with the operational trend determined via analysis of the multi-enterprise data.
Embodiment 11. The system of embodiment 10, wherein the notification component is further configured to send recommendation data to a client device in response to identification of the at least one of the hardware modification or the software modification, wherein the recommendation data comprises a recommendation to implement the at least one of the hardware modification or the software modification.
Embodiment 12. The system of embodiment 3, wherein the notification component is further configured to send a notification to a technical support entity in response to prediction of the performance problem.
Embodiment 13. A method for proactive detection of system failures in an industrial system, comprising:
   collecting industrial data from devices of an industrial automation system;
   storing the industrial data in cloud-based storage; and
   determining a probability that the industrial automation system will experience a performance degradation at a future time based on a first analysis of the industrial data.
Embodiment 14. The method of embodiment 13, wherein the storing comprises storing the industrial data in association with a customer identifier.
Embodiment 15. The method of embodiment 14, further comprising sending notification data to a client device associated with the customer identifier based on a result of the determining.
Embodiment 16. The method of embodiment 13, further comprising:
   collecting multi-enterprise industrial data from a plurality of industrial automation systems; and
   performing a second analysis on the multi-enterprise industrial data to learn at least one operational pattern as a function of at least one of an industry type, an industrial application type, a industrial asset configuration, an equipment type, an industrial device configuration setting, a firmware version, or a software version.
Embodiment 17. The method of embodiment 16, wherein the determining comprises determining the probability based on a result of the second analysis.
Embodiment 18. The method of embodiment 16, further comprising:
   identifying a firmware version installed on a device of the devices; and
   determining that replacing the firmware version with a different available firmware version has a probability of satisfying a performance goal of the industrial automation system based on the result of the second analysis.
Embodiment 19. The method of embodiment 13, further comprising sending notification data to a technical support entity based on a result of the determining.
Embodiment 20. A computer-readable medium having stored thereon computer-executable instructions that, in response to execution, cause a computing system to perform operations, the operations comprising
   monitoring, via a cloud platform, industrial data from a first industrial asset associated with a first industrial enterprise;
   correlating the industrial data with multi-enterprise data collected from one or more second industrial assets associated with respective one or more second industrial enterprises; and
   predicting a system inefficiency based on a result of the correlating.
Embodiment 21. The computer-readable medium of embodiment 20, wherein the operations further comprise sending a notification to a client device associated with the first industrial enterprise in response to the predicting.
Embodiment 22. The computer-readable medium of embodiment 20, wherein the operations further comprise learning, based on an analysis of the multi-enterprise data, an operational trend as a function of at least one of an industry type, an industrial application type, a industrial asset configuration, an equipment type, an industrial device configuration setting, a firmware version, or a software version.

## Claims

1. A system for performing predictive analysis on industrial data, comprising:
a memory that stores computer-executable components;
a processor, operatively coupled to the memory, that executes computer-executable components, the computer-executable components comprising:
a device interface component configured to collect industrial data from a set of devices comprising an industrial control system and store the industrial data on a cloud platform; and
a predictive analysis component configured to predict a performance problem of the industrial control system based on analysis of the industrial data.

2. The system of claim 1, wherein the device interface component is further configured to store the industrial data on the cloud platform in association with a customer identifier.

3. The system of claim 2, further comprising a notification component configured to send a notification to a client device associated with the customer identifier in response to prediction of the performance problem.

4. The system of any one of claims 1 to 3, wherein the industrial data comprises firmware data that indicates a current firmware revision for a device of the set of devices, and the predictive analysis component is further configured to determine whether a different available firmware version will bring a performance metric of the industrial control system within a defined range; or
wherein the predictive analysis component is further configured to determine that the different available firmware version will improve the performance metric based on an analysis of at least a subset of the industrial data with multi-enterprise data collected from multiple industrial systems.

5. The system of any one of claims 1 to 4, wherein the device interface component is further configured to classify the industrial data according to at least one of a device class, a process class, an asset class, or a system class; or
wherein the device interface component is further configured to collect multi-enterprise data from a plurality of industrial systems and to store the multi-enterprise data on the cloud platform; and/or
wherein the predictive analysis component is further configured to perform analysis on the multi-enterprise data to identify an operational trend as a function of at least one of an industry type, an industrial application type, a industrial asset configuration, an equipment type, an industrial device configuration setting, a firmware version, or a software version;
and/or
wherein the predictive analysis component is further configured to predict at least one of a device failure or a performance degradation of the industrial control system based on a comparison of the industrial data for the industrial control system with the operational trend determined via analysis of the multi-enterprise data.

6. The system of claim 5, wherein the predictive analysis component is further configured to identify at least one of a hardware modification or a software modification that will improve operation of the industrial control system based on a comparison of the industrial data for the industrial control system with the operational trend determined via analysis of the multi-enterprise data.

7. The system of claim 6, wherein the notification component is further configured to send recommendation data to a client device in response to identification of the at least one of the hardware modification or the software modification, wherein the recommendation data comprises a recommendation to implement the at least one of the hardware modification or the software modification.

8. The system of any one of claims 3 to 7, wherein the notification component is further configured to send a notification to a technical support entity in response to prediction of the performance problem.

9. A method for proactive detection of system failures in an industrial system, comprising:
collecting industrial data from devices of an industrial automation system;
storing the industrial data in cloud-based storage; and
determining a probability that the industrial automation system will experience a performance degradation at a future time based on a first analysis of the industrial data.

10. The method of claim 9, wherein the storing comprises storing the industrial data in association with a customer identifier; and/or
further comprising sending notification data to a client device associated with the customer identifier based on a result of the determining.

11. The method of claim 9 or 10, further comprising:
collecting multi-enterprise industrial data from a plurality of industrial automation systems; and
performing a second analysis on the multi-enterprise industrial data to learn at least one operational pattern as a function of at least one of an industry type, an industrial application type, a industrial asset configuration, an equipment type, an industrial device configuration setting, a firmware version, or a software version.

12. The method of claim 11, wherein the determining comprises determining the probability based on a result of the second analysis; or
further comprising:
identifying a firmware version installed on a device of the devices; and
determining that replacing the firmware version with a different available firmware version has a probability of satisfying a performance goal of the industrial automation system based on the result of the second analysis.

13. The method of any one of claims 9 to 12, further comprising sending notification data to a technical support entity based on a result of the determining.

14. A computer-readable medium having stored thereon computer-executable instructions that, in response to execution, cause a computing system to perform operations, the operations comprising
monitoring, via a cloud platform, industrial data from a first industrial asset associated with a first industrial enterprise;
correlating the industrial data with multi-enterprise data collected from one or more second industrial assets associated with respective one or more second industrial enterprises; and
predicting a system inefficiency based on a result of the correlating.

15. The computer-readable medium of claim 14, wherein the operations further comprise sending a notification to a client device associated with the first industrial enterprise in response to the predicting; or
wherein the operations further comprise learning, based on an analysis of the multi-enterprise data, an operational trend as a function of at least one of an industry type, an industrial application type, a industrial asset configuration, an equipment type, an industrial device configuration setting, a firmware version, or a software version.
